(19)

Europäisches
Patentamt
European
Patent Office
Office européen
des brevets

(11) **EP 4 318 325 A1**

(12) **EUROPEAN PATENT APPLICATION**

(43) Date of publication:
 **07.02.2024 Bulletin 2024/06**

(21) Application number: **22192432.7**

(22) Date of filing: **26.08.2022**

(51) International Patent Classification (IPC):
 **G06N 3/084** (2023.01)   **G06N 3/0464** (2023.01)
 **G06N 3/048** (2023.01)   **G06N 3/0495** (2023.01)
 **G06N 3/044** (2023.01)   **G06N 3/082** (2023.01)
 **G06N 3/088** (2023.01)

(52) Cooperative Patent Classification (CPC):
 **G06N 3/084; G06N 3/044; G06N 3/0464;
 G06N 3/048; G06N 3/0495; G06N 3/082;
 G06N 3/088**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(30) Priority: **04.08.2022 NL 2032686**

(71) Applicant: **NavInfo Europe B.V.
 5657 DB Eindhoven (NL)**

(72) Inventors:
 • **SARFRAZ, Fahad
 5657 DB Eindhoven (NL)**
 • **ARANI, Elahe
 5657 DB Eindhoven (NL)**
 • **ZONOOZ, Bahram
 5657 DB Eindhoven (NL)**

(74) Representative: **van Breda, Jacobus
 Octrooibureau Los & Stigter B.V.
 P.O. Box 20052
 1000 HB Amsterdam (NL)**

(54) **A COMPUTER-IMPLEMENTED METHOD AND A SYSTEM FOR A BIOLOGICALLY PLAUSIBLE FRAMEWORK FOR CONTINUAL LEARNING IN ARTIFICIAL NEURAL NETWORK**

(57) A computer-implemented method for general continual learning (CL) in artificial neural network that provides a biologically plausible framework for continual learning which incorporates different mechanisms inspired by the brain. The underlying model comprises separate populations of exclusively excitatory and exclusively inhibitory neurons in each layer which adheres to Dale's principle and the excitatory neurons (mimicking pyramidal cells) are augmented with dendrite-like structures for context-dependent processing of information. The dendritic segments process an additional context signal encoding task information and subsequently modulate the feedforward activity of the excitatory neuron. Additionally, it provides an efficient mechanism for controlling the sparsity in activations using k-WTA (k-Winners-Take-All) activations and Heterogeneous dropout mechanism that encourages the model to use a different set of neurons for each task. This provides an effective approach for maintaining a balance between reusability of features and interference which is critical for enabling CL. Furthermore, it complements the error-based learning with the "fire together, wire together" learning paradigm which further strengthen the association between the context signal and dendritic segments which process them and facilitates context-dependent gating. To further mitigate forgetting, it incorporates synaptic consolidation in conjunction with experience replay.

Fig. 1

EP 4 318 325 A1

**Description**

The invention relates to a computer-implemented method and a system for a Biologically Plausible Framework for continual learning in an artificial neural network.

**General description**

Catastrophic forgetting is the tendency of an artificial neural network to completely and abruptly forget previously learned information upon learning new information. Continual Learning (also known as Incremental Learning, Life-long Learning) is a concept to learn a model for a large number of tasks sequentially without forgetting knowledge obtained from the preceding tasks, where the data in the old tasks are not available anymore during training new ones.

The human brain excels at continually learning from a dynamically changing environment whereas standard artificial neural networks (ANNs) are inherently designed for training from stationary data. The sequential learning of tasks in continual learning (CL) violates this strong assumption, resulting in catastrophic forgetting. While ANNs are inspired by biological neurons [14], they omit numerous details of the design principles, and learning mechanisms in the brain. These fundamental differences may account for the mismatch in performance and behavior.

The ability to continuously learn and adapt to an ever-changing environment is essential for any learning agent (deep neural network) deployed in the real world. For instance, an autonomous car needs to continually adapt to different road, weather and lighting conditions, learn new traffic signs and lane marking as we move from one place to another.

Biological neural networks are characterized by considerably more complex synapses and dynamic context-dependent processing of information where each individual neuron has a specific role. Each presynaptic neuron has an exclusively excitatory or inhibitory impact on its postsynaptic partners as postulated by Dale's principle [37]. Furthermore, the distal dendritic segments in pyramidal neurons, which account for most excitatory cells in the neocortex, receive additional context information and enable context-dependent processing of information. This, in conjunction with inhibition, allows the network to learn task-specific patterns and avoid catastrophic forgetting [5, 23, 42]. Additionally, the replay of sparse non-overlapping neural activities of past experiences in the neocortex and hippocampus is considered to play a critical role in memory formation, consolidation, and retrieval [30, 41]. To protect information from erasure, the brain employs synaptic consolidation whereby the rates of plasticity are selectively decreased in proportion to strengthened synapses [10].

Standard ANNs, however, lack adherence to Dale's principle as neurons contain both positive and negative output weights, and the signs can change while learning. Furthermore, Standard ANNs are based on a point neuron model which is an oversimplified model of biological computations and lacks the sophisticated nonlinear and context-dependent behavior of pyramidal cells. While studies have attempted to address these shortcomings individually, there is a lack of a biologically plausible framework which incorporates all these biologically plausible components and enables studying the effect and interactions of different mechanisms inspired by the brain.

It is an object of the current invention to correct the shortcomings of the prior art and to mitigate catastrophic forgetting in DNNs whereby the network forgets previously learned information when learning a new task which requires a delicate balance between the stability (ability to retain previous information) and the plasticity (flexibility to learn new information) of the model. This and other objects which will become apparent from the following disclosure, are provided with a computer-implemented method for general continual learning in artificial neural networks, a data processing system, and a computer-readable medium, having the features of one or more of the appended claims.

In biological neural networks, dendritic segments are tree-like extensions at the periphery of a neuron that help increase the surface area of the neuron body. These tiny protrusions receive information from other neurons and transmit electrical stimulation to the neuron body. They can integrate postsynaptic signals nonlinearly and filter out insignificant background information. Similarly, in an artificial neural network, dendritic segments of artificial neurons are elements to funnel weighted synaptic inputs to the artificial neurons. Accordingly, they have the potential to mimic the integrative properties of their biological counterparts.

In a first aspect of the invention, the computer-implemented method for learning in an artificial neural network comprises the step of providing a network comprising a plurality of layers, wherein each layer comprises a population of exclusively excitatory neurons and a population of exclusively inhibitory neurons, wherein the population of exclusively excitatory neurons is larger than the population of exclusively inhibitory neurons and wherein all synaptic weights of said network are exclusively positive, i.e. the signs of the output weights of said neurons do not change while learning. In this method of the invention which is applied for general continual learning in an artificial neural network, the method comprises the steps of:

- calculating a feedforward activity in each layer by calculating a linear weighted sum of feedforward inputs wherein outputs of the excitatory neurons are impacted by a subtractive inhibition from the inhibitory neurons;
- providing dendritic segments in the excitatory neurons;

- augmenting said excitatory neurons with said dendritic segments;
- feeding a context vector into said dendritic segments;
- selecting the dendritic segment with the highest response to the context vector;
- modulating the feedforward activity of the excitatory neurons by the selected dendritic segment.

Furthermore, the method comprises the step of providing excitatory connections between the layers, excitatory projection to the inhibitory neurons and inhibitory projections within the layers, as synaptic weights of the network.
These features improve avoiding catastrophic forgetting and provide a biologically plausible framework where, like biological networks, the feedforward neurons adhere to Dale's principle and the excitatory neurons mimic the integrative properties of active dendrites for context-dependent processing of stimulus.
To enable context dependent processing of information, one instantiation of the context signal to the dendrites needs to be evaluated, therefore, the method comprises the step:

- evaluating a prototype vector for a current task by calculating an element-wise mean of tasks samples at the beginning of the current task; and
- providing said prototype vector as context vector during training.

Alternatively, the method comprises the steps:

- feeding an input image into a learnable context network for providing a prototype vector; and
- providing said prototype vector as context vector during training.

The learnable context network can be an Multi-Layer Perceptron (MLP) or a convolutional neural network (ConvNet) and it has the advantage of being able to provide different signals as context to the dendritic segments depending on the task to be solved.
Furthermore, the method comprises the step of selecting, during inference, the closest prototype vector to each test sample as the context vector using Euclidean distance among all task prototypes stored in memory.
To provide an efficient mechanism for controlling the sparsity in activations, the method comprises the step of using a k-Winners-Take-All function for selecting the dendritic segment with the highest response to the context vector.
Additionally, the method comprises the step of maintaining a constant sparsity in connections by randomly setting a percentage of weights to zero at initialization, wherein said percentage of weights is between 0 and 100%.
The context-dependent processing of information in conjunction with sparse activation patterns can effectively reduce the overlap of representations which leads to less interference between the tasks and thereby less forgetting. Therefore, the method comprises the steps of:

- for a current task, tracking activation counts of neurons in each layer; and
- for subsequent tasks, setting a probability of dropping said neurons inversely proportional to the activation counts of said neurons.

These features encourage the model to learn the new task by utilizing neurons that have been less active for previous tasks
For a biologically plausible ANN, it is important to not only incorporate the design elements of biological neurons, but also the learning mechanisms it employs. Lifetime plasticity in the brain generally follows the Hebbian principle: a neuron that consistently contributes to making another neuron fire will build a stronger connection to that neuron. Therefore, the method of the current invention comprises the step of strengthening connections between a context input and a dendritic segment corresponding to said context input, by applying a Hebbian update on said dendritic segments for each supervised parameter update with backpropagation.
Advantageously, the method comprises the step of using Oja's rule for adding weight decay to the Hebbian update.
Additionally, the method comprises the step of employing synaptic consolidation comprising the steps of:

- determining an importance estimate of each synapse in an online manner during training;
- identifying synapses that are important for learned tasks; and
- reducing plasticity of the identified synapses.

In addition to their integrative properties, dendrites also play a key role in retaining information and providing protection from erasure. The new spines that are formed on different sets of dendritic branches in response to learning different tasks are protected from being eliminated through mediation in synaptic plasticity and structural changes which persist when learning a new task. Hence, the method comprises the step of adjusting an importance estimate of each synapse to account for disparities, caused by the population of inhibitory neurons, in the degree to which updates to different parameters affect an output of a layer.

Additionally, the method comprises the steps of:

- upscaling the importance estimate of the excitatory connections to the inhibitory neurons; and
- upscaling the intra-layer inhibitory connections.

The replay mechanism in hippocampus has inspired a series of rehearsal-based approaches which have proven to be effective in challenging continual learning scenarios. Therefore, to replay samples from the previous tasks, the method comprises the step of maintained an episodic memory buffer by using Reservoir Sampling.

Suitably, the method comprises the step of matching a distribution of an incoming stream by assigning to each new sample equal probabilities for being represented in the episodic memory buffer.

More suitably, the method comprises the steps of:

- interleaving samples from a current task with samples from the episodic memory buffer, while training;
- saving output logits, across a training trajectory; and enforcing a consistency loss when replaying the samples from the episodic memory buffer.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, the data processing system comprise a computer loaded with a computer program wherein said program is arranged for causing the computer to carry out the steps of the computer-implemented method according to any one of aforementioned steps.

The invention will hereinafter be further elucidated with reference to the drawing of an exemplary embodiment of a computer-implemented method, a computer program and a data processing system according to the invention that is not limiting as to the appended claims.

In the drawing:

- figure 1 shows a schematic diagram for the computer-implemented method according to the invention;
- figure 2 shows a schematic diagram for the computer-implemented method according to the invention.

Whenever in the figures the same reference numerals are applied, these numerals refer to the same parts.

## Detailed description

### Dale's Principle:

Biological neural networks differ from their artificial counterparts in the complexity of the synapses and the role of individual units. Notably, most neurons in the brain adhere to Dale's principle which posits that presynaptic neurons can only have an exclusively excitatory or exclusively inhibitory impact on their postsynaptic partners [37]. Several studies show that the balanced dynamics [32, 39] of excitatory and inhibitory populations provide functional advantages, including efficient predictive coding [8] and pattern learning [22]. Furthermore, inhibition is hypothesized to play a role in alleviating catastrophic forgetting [5] . Standard ANNs, however, lack adherence to Dale's principle as neurons contain both positive and negative output weights, and the signs can change while learning.

Cornford *et al.* [11] incorporate Dale's principle into ANNs (referred to as DANNs) which take into account the distinct connectivity patterns of the excitatory and inhibitory neurons [38] and perform comparable to standard ANNs in benchmark object recognition task. Each layer $l$ comprises a separate population of excitatory, $h_e^l \in R_+^{ne}$, and inhibitory $h_i^l \in R_+^{ni}$ neurons, where $n_e \gg n_i$ and synaptic weights are strictly non-negative. Similar to biological networks, while both populations receive excitatory projections from the previous layer ($h^{l-1}$), only the excitatory neurons project between layers, whereas the inhibitory neurons inhibit the activity of the excitatory units of the same layer. Cornford *et al.* [11] characterized these properties by three sets of strictly positive weights:

○ excitatory connections between layers

$$W_{ee}^l \in \mathbb{R}_+^{n_e \times n_e}$$

○ excitatory projection to the inhibitory units

$$W_{ie}^l \in \mathbb{R}_+^{n_i \times n_e}$$

○ inhibitory projections within layers

$$W_{ei}^l \in \mathbb{R}_+^{n_e \times n_i}$$

The output of the excitatory units is impacted by the subtractive inhibition from the inhibitory units:

$$z^l = (W_{ee}^l - W_{ei}^l W_{ie}^l)h_e^{l-1} + b^l \tag{1}$$

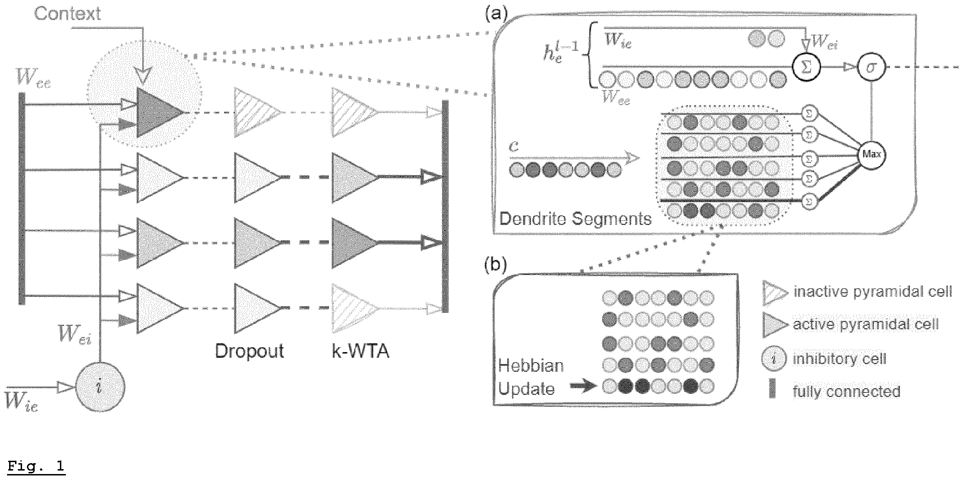

where $b^l \in R^{n_e}$ is the bias term. Figure 1 shows the interactions and connectivity between excitatory pyramidal cells (triangle symbol) and inhibitory neurons (denoted by i).

The method of the current invention employs DANNs as the feedforward neurons that performs comparable to standard ANNs in the challenging CL setting and provides a biologically plausible framework for further studying the role of inhibition in alleviating catastrophic forgetting.

Active Dendrites:

The brain employs specific structures and mechanisms for context-dependent processing and routing of information. The prefrontal cortex, playing an important role in cognitive control [31], receives sensory inputs as well as contextual information, which enables it to choose sensory features most relevant to the present task to guide actions [15, 29, 36, 44]. Of particular interest are the pyramidal cells which represent the most populous members of the excitatory family of neurons in the brain [7] . The dendritic spines in pyramid cells exhibit highly nonlinear integrative properties which are considered important for learning task-specific patterns [42]. Pyramidal cells integrate a range of diverse inputs on multiple independent dendritic segments whereby contextual inputs on active dendrites can modulate a neuron's response, making it more likely to fire. Standard ANNs are however based on a point neuron model [25] which is an oversimplified model of biological computations and lacks the sophisticated nonlinear and context-dependent behavior of pyramidal cells.

Iyer *et al.* [23] model these integrative properties of dendrites by augmenting each neuron with a set of dendritic segments. Multiple dendritic segments receive additional contextual information which is processed using separate set of weights. The resultant dendritic output modulates the feedforward activation which is computed by a linear weighted sum of the feedforward inputs. This computation results in a neuron where the magnitude of the response to a given stimulus is highly context dependent. To enable task-specific processing of information, the prototype vector $c_\tau$ for task r is evaluated by taking the element-wise mean of tasks samples, $D_\tau$ at the beginning of the task and then subsequently providing said prototype vector as context during training,

$$c_\tau = \frac{1}{|\mathcal{D}_\tau|} \sum_{x \in \mathcal{D}_\tau} x \tag{2}$$

During inference, the closest prototype vector to each test sample, x', is selected as the context using Euclidean distance among all the task prototypes, C, stored in memory.

$$c' = \arg\min_{c_\tau} \|x' - C_\tau\|_2 \tag{3}$$

The method of the current invention comprises the step of augmenting the excitatory units in each layer with dendritic segments (Figure 1(a)). The feedforward activity of excitatory units is modulated by the dendritic segments which receive a context vector. Given the context vector, each dendritic segment *j* computes $u_j^T c$, given weight $u_j \in R^d$ and context vector $c \in R^d$ where d is the dimensions of the input image. For excitatory neurons, the dendritic segment with the highest response to the context (maximum absolute value with the sign retained) is selected to modulate the output activity,

$$h_e^l = k\text{-}WTA(z_l \times \sigma(u_\kappa^T c)), \qquad \text{where } \kappa = \arg\max_j |u_j^T c| \qquad (4)$$

where $\sigma$ is the sigmoid function [18] and *k-WTA*(.) is the k-Winner-Take-All activation function [2] which propagates only the top k neurons and sets the rest to zero. This provides a biologically plausible framework where, like biological networks, the feedforward neurons adhere to Dale's principle and the excitatory neurons mimic the integrative properties of active dendrites for context dependent processing of stimulus.

Sparsity in activations and connections:

Neocortical circuits are characterized by high levels of sparsity in neural connectivity and activations [6, 16]. This is in stark contrast to the dense and highly entangled connectivity in the standard ANNs. Particularly for continual learning, sparsity provides several advantages: sparse non-overlapping representations can reduce interference between tasks [1, 3, 23], can lead to the natural emergence of task-specific modules [17], and sparse connectivity can further ensure fewer task-specific parameters [28].

The method according to the invention provides an efficient mechanism for setting different levels of activation sparsity by varying the ratio of active neurons in k-winners-take-all (k-WTA) activations [2] and constant sparsity in connections by setting a percentage of weights at random to 0 at initialization. Sparsity in activations effectively reduces interference by reducing the overlap in representations. Furthermore, it allows having different levels of sparsity in different layers which can further improve performance. As the earlier layers learn general features, having a higher ratio of active neurons can enable higher reusability and forward transfer. For the later layers, a smaller ratio of active neurons can reduce the interference between task-specific features.

Heterogeneous Dropout:

The context-dependent processing of information in conjunction with sparse activation patterns can effectively reduce the overlap of representations which leads to less interference between the tasks and thereby less forgetting. To further encourage the model to learn non-overlapping representations, the method of the current invention employs Heterogeneous dropout [1]. During training, the frequency of activations for each neuron in a layer for a given task is tracked, and in the subsequent tasks, the probability of a neuron being dropped is set to be inversely proportional to its activation counts. This encourages the model to learn the new task by utilizing neurons that have been less active for previous tasks. Figure 1 shows that neurons which have been more active (darker shade) are more likely to be dropped before k-WTA is applied. Concretely, let $[a_t^l]_j$ denote the activation counter for neuron $j$ in layer $l$ after learning t tasks. For learning task $t$+1, the probability of this neuron being retained is given by:

$$[p_{t+1}^l]_j = exp\left(\frac{-[a_t^l]_j}{\max_j [a_t^l]_j}\rho\right) \qquad (5)$$

where $\rho$ controls the strength of enforcement of non-overlapping representations with larger values leading to less overlap. This provides us with an efficient mechanism for controlling the degree of overlap between the representations of different tasks and hence the degree of forward transfer and interference based on the task similarities. It also allows having different dropout $\rho$ for each layer (with lower $\rho$ for earlier layers to encourage reusability and higher $\rho$ for later layers to reduce interference between task-representations). Heterogeneous dropout provides a simple mechanism for balancing the reusability and interference of features depending on the similarity of tasks.

Hebbian Learning:

For a biologically plausible ANN, it is important to not only incorporate the design elements of biological neurons, but also the learning mechanisms it employs. Lifetime plasticity in the brain generally follows the Hebbian principle: a neuron that consistently contributes to making another neuron fire will build a stronger connection to that neuron [21].

Therefore, the method of the current invention proposes to complement error-based learning with Hebbian update to strengthen the connections between the contextual information and dendritic segments (Figure 1(b)). Each supervised parameter update with backpropagation is followed by a Hebbian update step on the dendritic segments to strengthen the connections between the context input and the corresponding dendritic segment which is activated. To constrain the parameters, the method of the current invention comprises the step of using Oja's rule which adds weight decay to Hebbian learning [33],

$$ u_\kappa \leftarrow u_\kappa + \eta_h d(c - d u_\kappa) \tag{6} $$

where $\eta_h$ is learning rate, $\kappa$ is the index of the winning dendrite with weight $u_\kappa$ and modulating signal $d = u^T c$ for context signal c.

Synaptic Consolidation:

In addition to their integrative properties, dendrites also play a key role in retaining information and providing protection from erasure [10, 43]. The new spines that are formed on different sets of dendritic branches in response to learning different tasks are protected from being eliminated through mediation in synaptic plasticity and structural changes which persist when learning a new task [43].

The method of the invention employs synaptic consolidation by incorporating *Synaptic Intelligence* [45] which maintains an importance estimate of each synapse in an online manner during training and subsequently reduces the plasticity of synapses which are considered important for learned tasks. Notably, the method of the invention comprises the step of adjusting the importance estimate to account for the disparity in the degree to which updates to different parameters affect the layer's output because of the inhibitory interneuron architecture in DANN layers [11]. The importance estimate of the excitatory connections to the inhibitory units and the intra-layer inhibitory connections are upscaled to further penalize changes to these weights.

Experience Replay:

Replay of past neural activation patterns in the brain is considered to play a critical role in memory formation, consolidation, and retrieval [30, 41]. The replay mechanism in hippocampus [24] has inspired a series of rehearsal-based approaches [4, 9, 26, 27] which have proven to be effective in challenging continual learning scenarios [12, 17]. Therefore, to replay samples from the previous tasks, the computer-implemented method according to the current invention comprises the step of utilizing a small episodic memory buffer which is maintained through *Reservoir sampling* [40]. The method further comprises the step of approximately matching the distribution of the incoming stream by assigning equal probabilities to each new sample for being represented in the buffer. While training, samples from the current task, $(x_b, y_b) \sim D_\tau$, are interleaved with the memory buffer samples, $(x_m, y_m) \sim M$ to approximate the joint distribution of tasks seen so far. Furthermore, to mimic the replay of activation patterns that accompanied the learning event in brain, the output logits, $z_m$, are saved across the training trajectory and a consistency loss is enforced when replaying the samples from the episodic memory. Concretely, the loss is given by:

$$ \mathcal{L} = \mathcal{L}_{cls}(f(x_b; \theta), y_b) + \alpha \mathcal{L}_{cls}(f(x_m; \theta), y_m) + \beta(f(x_m; \theta) - z_m)^2 \tag{7} $$

where $f(.; \theta)$ is the model parameterized by $\theta$, $L_{cls}$ is the standard cross-entropy loss, and $\alpha$ and $\beta$ control the strength of interleaved training and consistency constraint respectively.

In figure 1, the architecture of one hidden layer in the biologically plausible framework is shown. Each layer consists of separate populations of exclusively excitatory pyramidal cells and inhibitory neurons which adheres to Dale's principle. (a) The pyramidal cells are augmented with dendritic segments which receive an additional context signal c and modulate the output activity of the feedforward neurons for context-dependent processing of information. (b) The Hebbian update step further strengthens the association between the context and the winning dendritic segment with maximum absolute value. Finally, Heterogeneous dropout keeps the activation count of each pyramidal cell and drops the neurons which were most active for the previous task to enforce non-overlapping representations.

The top-k remaining cells then project to the next layer.

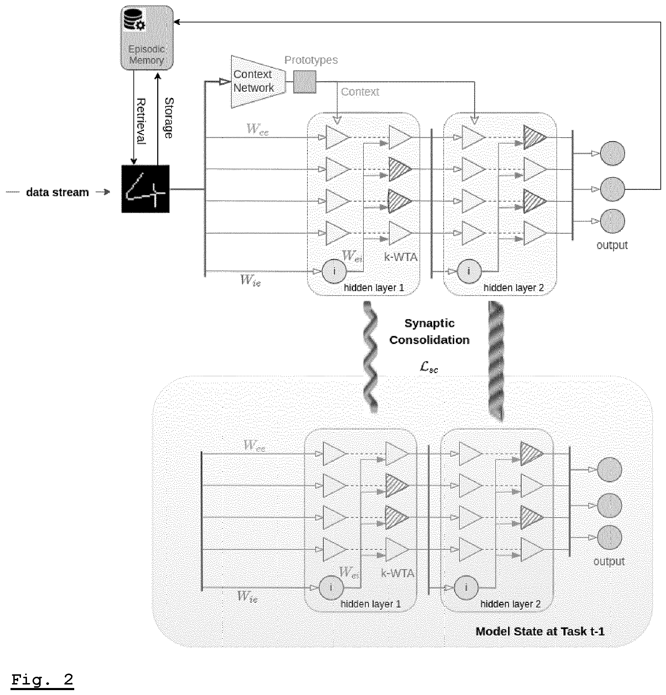

In figure 2, a full schematic of method of the current invention is shown: ach hidden layer consists of excitatory and inhibitory neurons and the excitatory neurons are augmented with dendritic segments. Each dendritic segment in different layers receives the same context signal which is either computed from the task samples (equation 2) or learned with another MLP network in an end-to-end manner. The details of each hidden layer are provided in Figure 1. Furthermore, experience replay is utilized for interleaved training of current samples with samples from the previous task. Additionally, the model maintains a running estimate of the importance of each parameter which are then utilized to penalize changes in important parameters from the values at the end of previous tasks.

The computer-implemented method according to the current invention comprises the step of incorporating the aforementioned aspects into a biologically plausible framework for CL, referred to as Bio- ANN. Table 1 shows that the different components complement each other and consistently improve the performance of the model. The empirical results suggest that employing multiple complementary components and learning mechanisms, like the brain, can be an effective approach to enable continual learning in ANNs.

Table 1: Effect of each component of the biologically plausible framework on different datasets with varying number of tasks. We first show the effect of utilizing feedforward neurons adhering to Dale's principle in conjunction with *Active Dendrites* to form the framework within which we evaluate the individual effect of brain-inspired mechanisms before combining them all together to forge Bio-ANN. We provide the average task performance and 1 std of three runs.

| Method | Rot-MNIST | | | Perm-MNIST | | | Seq-MNIST |
|---|---|---|---|---|---|---|---|
| | 5 | 10 | 20 | 5 | 10 | 20 | |
| Active Dendrites | 92.45±0.27 | 70.85±0.60 | 48.13±0.73 | 95.53±0.10 | 94.37±0.26 | 91.76±0.39 | 20.06±0.36 |
| + Dale's Principle | 92.28±0.27 | 70.78±0.23 | 48.79±0.27 | 95.77±0.33 | 95.06±0.29 | 92.40±0.38 | 19.81±0.03 |
| + Hebbian Update | 92.68±0.36 | 71.42±0.94 | 49.26±0.58 | 95.97±0.16 | 94.96±0.14 | 92.69±0.19 | 19.85±0.04 |
| + SC | 93.40±0.86 | 75.87±1.35 | 64.78±3.43 | 96.67±0.23 | 96.36±0.10 | 95.61±0.10 | 20.26±0.56 |
| + ER | 95.15±0.37 | 90.86±0.52 | 83.42±0.44 | 96.75±0.15 | 96.01±0.14 | 94.50±0.16 | 86.88±0.83 |
| + ER + CR | 96.67±0.06 | 93.85±0.24 | 89.38±0.16 | **97.34**±0.03 | 97.03±0.04 | 96.12±0.04 | 89.23±0.48 |
| Bio-ANN | **96.82**±0.14 | **94.64**±0.23 | **91.32**±0.26 | 97.33±0.04 | **97.07**±0.05 | **96.51**±0.03 | **89.26**±0.42 |

---

**Algorithm 1** Bio-ANN: A biologically plausible framework for CL.

**Input:** Data stream $\mathcal{D}$; Learning rates $\eta$, $\eta_{W_{ie}}$, $\eta_{W_{ei}}$; Hebbian learning rate $\eta_h$; Heterogeneous dropout $\rho$; Synaptic consolidation weights $\lambda$, $\lambda_{W_{ie}}$, $\lambda_{W_{ei}}$, $\gamma$; Experience replay weights $\alpha$, $\beta$

**Initialize:**
  Model weights $\theta$, Reference weights $\theta_c = \{\}$, Task prototypes $C_\tau = \{\}$
  Heterogeneous dropout: Overall activation counts $A_\tau = 0$, Keep probabilities $P_\tau = 1$
  Memory buffer $\mathcal{M} \leftarrow \{\}$
  Synaptic Intelligence: $\omega = 0$, $\Omega = 0$

                                                            ▷ Sample task from data stream

1: **for** $\mathcal{D}_\tau \in \{\mathcal{D}_1, \mathcal{D}_2, .., \mathcal{D}_T\}$ **do**

                                                            ▷ Task context

2:      Evaluate context vector (Eq. 2):
        $c_\tau = \frac{1}{|\mathcal{D}_\tau|} \sum_{x \in \mathcal{D}_\tau} x$

3:      Update the set of prototypes:
        $C_\tau \leftarrow \{C_\tau, c_\tau\}$

                                                                ▷ Train on task $\tau$

4:      **while** Training **do**

5:        Sample data: $(x_b, y_b) \sim \mathcal{D}_\tau$ and $(x_m, y_m, z_m) \sim \mathcal{M}$

                                                              ▷ Task specific loss

6:        Get the model output and activation counts on the current task batch:
        $z_b, a_b = F(x_b, c_\tau; \theta, P_\tau)$    # Apply Heterogeneous dropout

7:        Calculate task loss:
        $\mathcal{L}_\tau = \mathcal{L}_{cls}(z_b, y_b)$

8:        Update overall activation counts:
        $A_\tau \leftarrow \text{UpdateActivationCounts}(a_b)$

                                                                  ▷ Experience replay

9:        Infer context for buffer samples (Eq. 3):
        $c_m = \arg\min_{c_\tau} \|x' - C_\tau\|_2$

10:      Get model output on buffer samples:
        $z = F(x_m, c_m; \theta)$       # Disable Heterogeneous dropout

11:      Calculate replay loss:
        $\mathcal{L}_{er} = \alpha \mathcal{L}_{cls}(z, y_m) + \beta(z - z_m)^2$

                                                           ▷ Synaptic regularization

12:      Calculate SI loss:
        $\mathcal{L}_{sc} = \Omega_{adj}(\theta - \theta_c)^2$

13:      Calculate overall loss and clip the gradient between 0 and 1:
        $\mathcal{L} = \mathcal{L}_\tau + \mathcal{L}_{er} + \mathcal{L}_{sc}$
        $\nabla_\theta \mathcal{L} = \text{Clip}(\nabla_\theta \mathcal{L}, 0, 1)$

                                                                   ▷ Update Models

14:      SGD update: $\theta = \text{UpdateModel}(\nabla_\theta \mathcal{L}, \eta, \eta_{W_{ie}}, \eta_{W_{ei}})$

15:      Hebbian update on dendritic segments:   $U = \text{HebbianStep}(\{c_\tau, c_m\}, U)$

16:

17:      Update small omega:   $\omega = \omega + \eta \nabla_\theta^2 \mathcal{L})$           ▷ Update SI parameter

18:      $\mathcal{M} \leftarrow Reservoir(\mathcal{M}, (x_b, y_b, z_b))$        ▷ Update memory buffer (Algorithm 2)

19:      **end while**

20:                                                                       ▷ Task Boundary

21:     Update keep Probabilities (Eq 5):   $P_\tau = exp(\frac{-A_\tau}{\max A_\tau}\rho)$

22:     Update SI Omega and reference weights and reset small omega:
        $\Omega = \Omega + \frac{\omega}{(\theta - \theta_c)^2 + \gamma}$
        $\omega = 0$
        $\theta_c = \theta$

23:     Scale up importance for inhibitory weights
        $\Omega_{adj} = \text{ScaleUpInhib}(\Omega, \lambda_{W_{ie}}, \lambda_{W_{ei}})$

24: **end for**
     **return** $\theta$

---

Embodiments of the present invention can include every combination of features that are disclosed herein independently from each other.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers/distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible nontransitive memory-storage devices.

References:

[1] Ali Abbasi, Parsa Nooralinejad, Vladimir Braverman, Hamed Pirsiavash, and Soheil Kolouri. Sparsity and heterogeneous dropout for continual learning in the null space of neural activations. arXiv preprint arXiv:2203.06514, 2022.

[2] Subutai Ahmad and Luiz Scheinkman. How can we be so dense? the benefits of using highly sparse representations. arXiv preprint arXiv:1903.11257, 2019.

[3] Rahaf Aljundi, Marcus Rohrbach, and Tinne Tuytelaars. Selfless sequential learning. arXiv preprint arXiv:1806.05421, 2018.

[4] Elahe Arani, Fahad Sarfraz, and Bahram Zonooz. Learning fast, learning slow: A general continual learning method based on complementary learning system. In International Conference on Learning Representations, 2022.

[5] Helen C Barron, Tim P Vogels, Timothy E Behrens, and Mani Ramaswami. Inhibitory engrams in perception and memory. Proceedings of the National Academy of Sciences, 114(26):6666-6674, 2017.

[6] Alison L Barth and James FA Poulet. Experimental evidence for sparse firing in the neocortex. Trends in neurosciences, 35(6):345-355, 2012.

[7] John M Bekkers. Pyramidal neurons. Current biology, 21(24):R975, 2011.

[8] Martin Boerlin, Christian K Machens, and Sophie Denève. Predictive coding of dynamical variables in balanced spiking networks. PLoS computational biology, 9(11):e1003258, 2013.

[9] Arslan Chaudhry, Marc'Aurelio Ranzato, Marcus Rohrbach, and Mohamed Elhoseiny. Efficient lifelong learning with a-gem. arXiv preprint arXiv:1812.00420, 2018.

[10] Joseph Cichon and Wen-Biao Gan. Branch-specific dendritic ca 2+ spikes cause persistent synaptic plasticity. Nature, 520(7546):180-185, 2015.

[11] Jonathan Cornford, Damjan Kalajdzievski, Marco Leite, Amélie Lamarquette, Dimitri Michael Kullmann, and Blake Aaron Richards. Learning to live with dale's principle: Anns with separate excitatory and inhibitory units. In International Conference on Learning Representations, 2020.

[12] Sebastian Farquhar and Yarin Gal. Towards robust evaluations of continual learning. arXiv preprint arXiv:1805.09733, 2018.

[13] Timo Flesch, David G Nagy, Andrew Saxe, and Christopher Summerfield. Modelling continual learn- ing in humans with hebbian context gating and exponentially decaying task signals. arXiv preprint arXiv:2203.11560, 2022.

[14] Kunihiko Fukushima. A self-organizing neural network model for a mechanism of pattern recognition unaffected by shift in position. Biol. Cybern., 36:193-202, 1980.

[15] Joaquin Fuster. The prefrontal cortex. Academic press, 2015.

[16] Daniel J Graham and David J Field. Sparse coding in the neocortex. Evolution of nervous systems, 3:181-187, 2006.

[17] Raia Hadsell, Dushyant Rao, Andrei A Rusu, and Razvan Pascanu. Embracing change: Continual learning in deep neural networks. Trends in cognitive sciences, 24(12):1028-1040, 2020.

[18] Jun Han and Claudio Moraga. The influence of the sigmoid function parameters on the speed of back- propagation learning. In International workshop on artificial neural networks, pages 195-201. Springer, 1995.

[19] Demis Hassabis, Dharshan Kumaran, Christopher Summerfield, and Matthew Botvinick. Neuroscienceinspired artificial intelligence. Neuron, 95(2):245-258, 2017.

[20] Tyler L Hayes, Giri P Krishnan, Maxim Bazhenov, Hava T Siegelmann, Terrence J Sejnowski, and Christopher Kanan. Replay in deep learning: Current approaches and missing biological elements. Neural Computation, 33(11):2908-2950, 2021.

[21] Donald Olding Hebb. The organization of behavior: A neuropsychological theory. Psychology Press, 2005.

[22] Alessandro Ingrosso and LF Abbott. Training dynamically balanced excitatory-inhibitory networks. PloS one, 14(8):e0220547, 2019.

[23] Abhiram Iyer, Karan Grewal, Akash Velu, Lucas Oliveira Souza, Jeremy Forest, and Subutai Ahmad. Avoiding catastrophe: Active dendrites enable multi-task learning in dynamic environments. arXiv preprint arXiv:2201.00042, 2021.

[24] Dharshan Kumaran, Demis Hassabis, and James L McClelland. What learning systems do intelligent agents need? complementary learning systems theory updated. Trends in cognitive sciences, 20(7):512-534, 2016.

[25] Louis Lapique. Recherches quantitatives sur l'excitation electrique des nerfs traitee comme une polarization. Journal of Physiology and Pathololgy, 9:620-635, 1907.

[26] Zhizhong Li and Derek Hoiem. Learning without forgetting. IEEE transactions on pattern analysis and machine intelligence, 40(12):2935-2947, 2017.

[27] David Lopez-Paz and Marc'Aurelio Ranzato. Gradient episodic memory for continual learning. In Advances in neural information processing systems, pages 6467-6476, 2017.

[28] Arun Mallya, Dillon Davis, and Svetlana Lazebnik. Piggyback: Adapting a single network to multiple tasks by learning to mask weights. In Proceedings of the European Conference on Computer Vision (ECCV), pages 67-82, 2018.

[29] Valerio Mante, David Sussillo, Krishna V Shenoy, and William T Newsome. Context-dependent computa- tion by recurrent dynamics in prefrontal cortex. nature, 503(7474):78-84, 2013.

[30] James L McClelland, Bruce L McNaughton, and Randall C O'Reilly. Why there are complementary learn- ing systems in the hippocampus and neocortex: insights from the successes and failures of connectionist models of learning and memory. Psychological review, 102(3):419, 1995.

[31] Earl K Miller and Jonathan D Cohen. An integrative theory of prefrontal cortex function. Annual review of neuroscience, 24(1):167-202, 2001.

[32] Brendan K Murphy and Kenneth D Miller. Balanced amplification: a new mechanism of selective amplification of neural activity patterns. Neuron, 61(4):635-648, 2009.

[33] Erkki Oja. Simplified neuron model as a principal component analyzer. Journal of mathematical biology, 15(3):267-273, 1982.

[34] Blake A Richards, Timothy P Lillicrap, Philippe Beaudoin, Yoshua Bengio, Rafal Bogacz, Amelia Christensen, Claudia Clopath, Rui Ponte Costa, Archy de Berker, Surya Ganguli, et al. A deep learning framework for neuroscience. Nature neuroscience, 22(11):1761-1770, 2019.

[35] Martin Schrimpf, Jonas Kubilius, Ha Hong, Najib J Majaj, Rishi Rajalingham, Elias B Issa, Kohitij Kar, Pouya Bashivan, Jonathan Prescott-Roy, Franziska Geiger, et al. Brain-score: Which artificial neural network for object recognition is most brain-like? BioRxiv, page 407007, 2020.

[36] Markus Siegel, Timothy J Buschman, and Earl K Miller. Cortical information flow during flexible sensorimotor decisions. Science, 348(6241):1352-1355, 2015.

[37] Piergiorgio Strata, Robin Harvey, et al. Dale's principle. Brain research bulletin, 50(5):349-350, 1999.

[38] Robin Tremblay, Soohyun Lee, and Bernardo Rudy. Gabaergic interneurons in the neocortex: from cellular properties to circuits. Neuron, 91(2):260-292, 2016.

[39] Carl Van Vreeswijk and Haim Sompolinsky. Chaos in neuronal networks with balanced excitatory and inhibitory activity. Science, 274(5293):1724-1726, 1996.

[40] Jeffrey S Vitter. Random sampling with a reservoir. ACM Transactions on Mathematical Software (TOMS), 11(1):37-57, 1985.

[41] Matthew P Walker and Robert Stickgold. Sleep-dependent learning and memory consolidation. Neuron, 44(1):121-133, 2004.

[42] Guang Yang, Cora Sau Wan Lai, Joseph Cichon, Lei Ma, Wei Li, and Wen-Biao Gan. Sleep promotes branch-specific formation of dendritic spines after learning. Science, 344(6188):1173-1178, 2014.

[43] Guang Yang, Feng Pan, and Wen-Biao Gan. Stably maintained dendritic spines are associated with lifelong memories. Nature, 462(7275):920-924, 2009.

[44] Guanxiong Zeng, Yang Chen, Bo Cui, and Shan Yu. Continual learning of context-dependent processing in neural networks. Nature Machine Intelligence, 1(8):364-372, 2019.

[45] Friedemann Zenke, Ben Poole, and Surya Ganguli. Continual learning through synaptic intelligence. In International Conference on Machine Learning, pages 3987-3995. PMLR, 2017.

[46] Mehrdad Farajtabar, Navid Azizan, Alex Mott, and Ang Li. Orthogonal gradient descent for continual learning. In International Conference on Artificial Intelligence and Statistics, pages 3762-3773. PMLR, 2020

[47] James Kirkpatrick, Razvan Pascanu, Neil Rabinowitz, JoelVeness, Guillaume Desjardins, Andrei A Rusu, KieranMilan, John Quan, Tiago Ramalho, Agnieszka Grabska-Barwinska, et al. Overcoming catastrophic forgetting in neural networks. Proceedings of the national academy of sciences, 114(13):3521-3526, 2017

[48] Hippolyt Ritter, Aleksandar Botev, and David Barber. Online structured laplace approximations for overcoming catastrophic forgetting. In Advances in Neural Information Processing Systems, pages 3738-3748, 2018

[49] Andrei A Rusu, Neil C Rabinowitz, Guillaume Desjardins,Hubert Soyer, James Kirkpatrick, Koray Kavukcuoglu, Raz-van Pascanu, and Raia Hadsell. Progressive neural networks. arXiv preprint arXiv:1606.04671, 2016

[50] Jaehong Yoon, Eunho Yang, Jeongtae Lee, and Sung JuHwang. Lifelong learning with dynamically expandable networks. arXiv preprint arXiv:1708.01547, 2017

[51] Anthony Robins. Catastrophic forgetting, rehearsal and pseudorehearsal. Connection Science, 7(2):123-146, 1995

[52] Matthew Riemer, Ignacio Cases, Robert Ajemian, Miao Liu,Irina Rish, Yuhai Tu, and Gerald Tesauro. Learning to learn without forgetting by maximizing transfer and minimizing interference. arXiv preprint arXiv:1810.11910, 2018

[53] Sylvestre-Alvise Rebuffi, Alexander Kolesnikov, GeorgSperl, and Christoph H Lampert. icarl: Incremental classifier and representation learning. In Proceedings of the IEEE conference on Computer Vision and Pattern Recognition, pages2001-2010, 2017

[54] Pietro Buzzega, Matteo Boschini, Angelo Porrello, DavideAbati, and Simone Calderara. Dark experience for general continual learning: a strong, simple baseline. arXiv preprintarXiv:2004.07211, 2020

[55] Sebastian Farquhar and Yarin Gal. Towards robust evaluations of continual learning. arXiv preprintarXiv:1805.09733, 2018

[56] Nitin Kamra, Umang Gupta, and Yan Liu. Deep generative dual memory network for continual learning. ArXiv preprint arXiv:1710.10368, 2017.

**Claims**

1. A computer-implemented method for learning in an artificial neural network, comprising the step of providing a network comprising a plurality of layers, wherein each layer comprises a population of exclusively excitatory neurons and a population of exclusively inhibitory neurons, wherein the population of exclusively excitatory neurons is larger than the population of exclusively inhibitory neurons and wherein all synaptic weights of said network are exclusively positive, **characterized in that,** the method is for general continual learning in an artificial neural network wherein the method comprises the steps of:

   - calculating a feedforward activity in each layer by calculating a linear weighted sum of feedforward inputs wherein outputs of the excitatory neurons are impacted by a subtractive inhibition from the inhibitory neurons;
   - providing dendritic segments in the excitatory neurons;
   - augmenting said excitatory neurons with said dendritic segments;
   - feeding a context vector into said dendritic segments;
   - selecting the dendritic segment with the highest response to the context vector; and
   - modulating the feedforward activity of the excitatory neurons by the selected dendritic segment.

2. The computer-implemented method of claim 1, **characterized in that** the method comprises the step of providing excitatory connections between the layers, excitatory projection to the inhibitory neurons and inhibitory projections within the layers, as synaptic weights of the network.

3. The computer-implemented method of any of the preceding claims, **characterized in that** the method comprises the step:

   - evaluating a prototype vector for a current task by calculating an element-wise mean of tasks samples at the beginning of the current task; and
   - providing said prototype vector as context vector during training,

   and that preferably the method comprises the step of feeding an input image into a learnable context network for providing a prototype vector.

4. The computer-implemented method of any of the preceding claims, **characterized in that** the method comprises the step of selecting, during inference, a closest prototype vector to each test sample as a context vector using Euclidean distance among all task prototypes stored in memory.

5. The computer-implemented method of any of the preceding claims, **characterized in that** the method comprises the step of using a k-Winners-Take-All function for selecting the dendritic segment with the highest response to the context vector.

6. The computer-implemented method of any of the preceding claims, **characterized in that** the method comprises the step of setting different levels of activation sparsity by varying the ratio of active neurons in k-winners-take-all (k-WTA) activations, and that preferably the method comprises the step of maintaining a constant sparsity in connections by randomly setting a percentage of weights to zero at initialization, wherein said percentage of weights is between 0 and 100%.

7. The computer-implemented method of any of the preceding claims, **characterized in that** the method comprises the steps of:

   - for a current task, tracking activation counts of neurons in each layer; and
   - for subsequent tasks, setting a probability of dropping said neurons inversely proportional to the activation counts of said neurons.

8. The computer-implemented method of any of the preceding claims, **characterized in that** the method comprises the step of strengthening connections between a context input and a dendritic segment corresponding to said context input, by applying a Hebbian update on said dendritic segments for each supervised parameter update with backpropagation, and that preferably the method comprises the step of using Oja's rule for adding weight decay to the Hebbian update.

9. The computer-implemented method of any of the preceding claims, **characterized in that** the method comprises the step of employing synaptic consolidation comprising the steps of:

   - determining an importance estimate of each synapse in an online manner during training;
   - identifying synapses that are important for learned tasks; and
   - reducing plasticity of the identified synapses.

10. The computer-implemented method of any of the preceding claims, **characterized in that** the method comprises the step of adjusting an importance estimate of each synapse to account for disparities in the degree to which updates to different parameters affect an output of a layer, wherein said disparities are caused by the population of inhibitory neurons.

11. The computer-implemented method of any of the preceding claims, **characterized in that** the method comprises the steps of:

   - upscaling the importance estimate of the excitatory connections to the inhibitory neurons; and
   - upscaling the intra-layer inhibitory connections.

**12.** The computer-implemented method of any of the preceding claims, **characterized in that** the method comprises the steps of

- maintained an episodic memory buffer by using Reservoir Sampling; and
- matching a distribution of an incoming stream by assigning to each new sample equal probabilities for being represented in the episodic memory buffer.

**13.** The computer-implemented method of any of the preceding claims, **characterized in that** the method comprises the steps of:

- interleaving samples from a current task with samples from the episodic memory buffer, while training;
- saving output logits, across a training trajectory; and
- enforcing a consistency loss when replaying the samples from the episodic memory buffer.

**14.** A computer-readable medium provided with a computer program, **characterized in that** when said computer program is loaded and executed by a computer, said computer program causes the computer to carry out the steps of the computer-implemented method according to any one of claims 1-13.

**15.** A data processing system comprising a computer loaded with a computer program, **characterized in that** said program is arranged for causing the computer to carry out the steps of the computer-implemented method according to any one of claims 1-13.

Fig. 1

**Fig. 2**

Europäisches
Patentamt

European
Patent Office

Office européen
des brevets

# EUROPEAN SEARCH REPORT

Application Number

EP 22 19 2432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ABHIRAM IYER ET AL: "Avoiding Catastrophe: Active Dendrites Enable Multi-Task Learning in Dynamic Environments", ARXIV.ORG, CORNELL UNIVERSITY LIBRARY, 201 OLIN LIBRARY CORNELL UNIVERSITY ITHACA, NY 14853, 25 April 2022 (2022-04-25), XP091196275, DOI: 10.3389/FNBOT.2022.846219 * abstract; figures 2, 7, 8 * * section 1, lines 22-23 * * section 1, lines 33-34 * * section 2.1.2, lines 7-12 * * section 3 * * section 3.1-3.3 * * section 4.2 * * section 4.2.1 * * section 4.2.2 * * section 4.2.3, lines 1-3 * * section 4.2.3, lines 7-13 * * section 6.1.4, lines 14-16 * * equations (1)-(5) * ----- | 1-15 | INV. G06N3/084 G06N3/0464 G06N3/048 G06N3/0495 G06N3/044 G06N3/082 G06N3/088 |
| X,D | ELAHE ARANI ET AL: "Learning Fast, Learning Slow: A General Continual Learning Method based on Complementary Learning System", ARXIV.ORG, CORNELL UNIVERSITY LIBRARY, 201 OLIN LIBRARY CORNELL UNIVERSITY ITHACA, NY 14853, 10 May 2022 (2022-05-10), XP091217140, * section 3.2 * * section 3.3 * * section 4, lines 10-12 * * algorithm 1 * ----- | 1-15 | TECHNICAL FIELDS SEARCHED (IPC) G06N |

The present search report has been drawn up for all claims

| Place of search | Date of completion of the search | Examiner |
|---|---|---|
| The Hague | 12 May 2023 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALI ABBASI ; PARSA NOORALINEJAD ; VLADIMIR BRAVERMAN ; HAMED PIRSIAVASH ; SOHEIL KOLOURI.** Sparsity and heterogeneous dropout for continual learning in the null space of neural activations. *arXiv:2203.06514,* 2022
- **SUBUTAI AHMAD ; LUIZ SCHEINKMAN.** How can we be so dense? the benefits of using highly sparse representations. *arXiv:1903.11257,* 2019
- **RAHAF ALJUNDI ; MARCUS ROHRBACH ; TINNE TUYTELAARS.** Selfless sequential learning. *arXiv:1806.05421,* 2018
- **ELAHE ARANI ; FAHAD SARFRAZ ; BAHRAM ZONOOZ.** Learning fast, learning slow: A general continual learning method based on complementary learning system. *International Conference on Learning Representations,* 2022
- **HELEN C BARRON ; TIM P VOGELS ; TIMOTHY E BEHRENS ; MANI RAMASWAMI.** Inhibitory engrams in perception and memory. *Proceedings of the National Academy of Sciences,* 2017, vol. 114 (26), 6666-6674
- **ALISON L BARTH ; JAMES FA POULET.** Experimental evidence for sparse firing in the neocortex. *Trends in neurosciences,* 2012, vol. 35 (6), 345-355
- **JOHN M BEKKERS.** Pyramidal neurons. *Current biology,* 2011, vol. 21 (24), R975
- **MARTIN BOERLIN ; CHRISTIAN K MACHENS ; SOPHIE DENÈVE.** Predictive coding of dynamical variables in balanced spiking networks. *PLoS computational biology,* 2013, vol. 9 (11), e1003258
- **ARSLAN CHAUDHRY ; MARC'AURELIO RANZATO ; MARCUS ROHRBACH ; MOHAMED ELHOSEINY.** Efficient lifelong learning with a-gem. *arXiv:1812.00420,* 2018
- **JOSEPH CICHON ; WEN-BIAO GAN.** Branch-specific dendritic ca 2+ spikes cause persistent synaptic plasticity. *Nature,* 2015, vol. 520 (7546), 180-185
- **JONATHAN CORNFORD ; DAMJAN KALAJDZIEVSKI ; MARCO LEITE ; AMÉLIE LAMARQUETTE ; DIMITRI MICHAEL KULLMANN ; BLAKE AARON RICHARDS.** Learning to live with dale's principle: Anns with separate excitatory and inhibitory units. *International Conference on Learning Representations,* 2020
- **SEBASTIAN FARQUHAR ; YARIN GAL.** Towards robust evaluations of continual learning. *arXiv:1805.09733,* 2018

- **TIMO FLESCH ; DAVID G NAGY ; ANDREW SAXE ; CHRISTOPHER SUMMERFIELD.** Modelling continual learning in humans with hebbian context gating and exponentially decaying task signals. *arXiv:2203.11560,* 2022
- **KUNIHIKO FUKUSHIMA.** A self-organizing neural network model for a mechanism of pattern recognition unaffected by shift in position. *Biol. Cybern.,* 1980, vol. 36, 193-202
- **JOAQUIN FUSTER.** The prefrontal cortex. Academic press, 2015
- **DANIEL J GRAHAM ; DAVID J FIELD.** Sparse coding in the neocortex. *Evolution of nervous systems,* 2006, vol. 3, 181-187
- **RAIA HADSELL ; DUSHYANT RAO ; ANDREI A RUSU ; RAZVAN PASCANU.** Embracing change: Continual learning in deep neural networks. *Trends in cognitive sciences,* 2020, vol. 24 (12), 1028-1040
- The influence of the sigmoid function parameters on the speed of back-propagation learning. **JUN HAN ; CLAUDIO MORAGA.** International workshop on artificial neural networks. Springer, 1995, 195-201
- **DEMIS HASSABIS ; DHARSHAN KUMARAN ; CHRISTOPHER SUMMERFIELD ; MATTHEW BOTVINICK.** Neuroscienceinspired artificial intelligence. *Neuron,* 2017, vol. 95 (2), 245-258
- **TYLER L HAYES ; GIRI P KRISHNAN ; MAXIM BAZHENOV ; HAVA T SIEGELMANN ; TERRENCE J SEJNOWSKI ; CHRISTOPHER KANAN.** Replay in deep learning: Current approaches and missing biological elements. *Neural Computation,* 2021, vol. 33 (11), 2908-2950
- **DONALD OLDING HEBB.** The organization of behavior: A neuropsychological theory. Psychology Press, 2005
- **ALESSANDRO INGROSSO ; LF ABBOTT.** Training dynamically balanced excitatory-inhibitory networks. *PloS one,* 2019, vol. 14 (8), e0220547
- **ABHIRAM IYER ; KARAN GREWAL ; AKASH VELU ; LUCAS OLIVEIRA SOUZA ; JEREMY FOREST ; SUBUTAI AHMAD.** Avoiding catastrophe: Active dendrites enable multi-task learning in dynamic environments. *arXiv:2201.00042,* 2021

- **DHARSHAN KUMARAN ; DEMIS HASSABIS ; JAMES L MCCLELLAND.** What learning systems do intelligent agents need? complementary learning systems theory updated. *Trends in cognitive sciences,* 2016, vol. 20 (7), 512-534
- **LOUIS LAPIQUE.** Recherches quantitatives sur l'excitation electrique des nerfs traitee comme une polarization. *Journal of Physiology and Pathololgy,* 1907, vol. 9, 620-635
- **ZHIZHONG LI ; DEREK HOIEM.** Learning without forgetting. *IEEE transactions on pattern analysis and machine intelligence,* 2017, vol. 40 (12), 2935-2947
- **DAVID LOPEZ-PAZ ; MARC'AURELIO RANZATO.** Gradient episodic memory for continual learning. *Advances in neural information processing systems,* 2017, 6467-6476
- **ARUN MALLYA ; DILLON DAVIS ; SVETLANA LA-ZEBNIK.** Piggyback: Adapting a single network to multiple tasks by learning to mask weights. *Proceedings of the European Conference on Computer Vision (ECCV),* 2018, 67-82
- **VALERIO MANTE ; DAVID SUSSILLO ; KRISHNA V SHENOY ; WILLIAM T NEWSOME.** Context-dependent computa- tion by recurrent dynamics in prefrontal cortex. *nature,* 2013, vol. 503 (7474), 78-84
- **JAMES L MCCLELLAND ; BRUCE L MCNAUGHTON ; RANDALL C O'REILLY.** Why there are complementary learn- ing systems in the hippocampus and neocortex: insights from the successes and failures of connectionist models of learning and memory. *Psychological review,* 1995, vol. 102 (3), 419
- **EARL K MILLER ; JONATHAN D COHEN.** An integrative theory of prefrontal cortex function. *Annual review of neuroscience,* 2001, vol. 24 (1), 167-202
- **BRENDAN K MURPHY ; KENNETH D MILLER.** Balanced amplification: a new mechanism of selective amplification of neural activity patterns. *Neuron,* 2009, vol. 61 (4), 635-648
- **ERKKI OJA.** Simplified neuron model as a principal component analyzer. *Journal of mathematical biology,* 1982, vol. 15 (3), 267-273
- **BLAKE A RICHARDS ; TIMOTHY P LILLICRAP ; PHILIPPE BEAUDOIN ; YOSHUA BENGIO ; RAFAL BOGACZ ; AMELIA CHRISTENSEN ; CLAUDIA CLOPATH ; RUI PONTE COSTA ; ARCHY DE BERKER ; SURYA GANGULI et al.** A deep learning framework for neuroscience. *Nature neuroscience,* 2019, vol. 22 (11), 1761-1770
- **MARTIN SCHRIMPF ; JONAS KUBILIUS ; HA HONG ; NAJIB J MAJAJ ; RISHI RAJALINGHAM ; ELIAS B ISSA ; KOHITIJ KAR ; POUYA BASHIVAN ; JONATHAN PRESCOTT-ROY ; FRANZISKA GEIGER et al.** Brain-score: Which artificial neural network for object recognition is most brain-like?. *BioRxiv,* 2020, 407007
- **MARKUS SIEGEL ; TIMOTHY J BUSCHMAN ; EARL K MILLER.** Cortical information flow during flexible sensorimotor decisions. *Science,* 2015, vol. 348 (6241), 1352-1355
- **PIERGIORGIO STRATA ; ROBIN HARVEY et al.** Dale's principle. *Brain research bulletin,* 1999, vol. 50 (5), 349-350
- **ROBIN TREMBLAY ; SOOHYUN LEE ; BERNARDO RUDY.** Gabaergic interneurons in the neocortex: from cellular properties to circuits. *Neuron,* 2016, vol. 91 (2), 260-292
- **CARL VAN VREESWIJK ; HAIM SOMPOLINSKY.** Chaos in neuronal networks with balanced excitatory and inhibitory activity. *Science,* 1996, vol. 274 (5293), 1724-1726
- **JEFFREY S VITTER.** Random sampling with a reservoir. *ACM Transactions on Mathematical Software (TOMS),* 1985, vol. 11 (1), 37-57
- **MATTHEW P WALKER ; ROBERT STICKGOLD.** Sleep-dependent learning and memory consolidation. *Neuron,* 2004, vol. 44 (1), 121-133
- **GUANG YANG ; CORA SAU WAN LAI ; JOSEPH CICHON ; LEI MA ; WEI LI ; WEN-BIAO GAN.** Sleep promotes branch-specific formation of dendritic spines after learning. *Science,* 2014, vol. 344 (6188), 1173-1178
- **GUANG YANG ; FENG PAN ; WEN-BIAO GAN.** Stably maintained dendritic spines are associated with lifelong memories. *Nature,* 2009, vol. 462 (7275), 920-924
- **GUANXIONG ZENG ; YANG CHEN ; BO CUI ; SHAN YU.** Continual learning of context-dependent processing in neural networks. *Nature Machine Intelligence,* 2019, vol. 1 (8), 364-372
- Continual learning through synaptic intelligence. **FRIEDEMANN ZENKE ; BEN POOLE ; SURYA GANGULI.** International Conference on Machine Learning. PMLR, 2017, 3987-3995
- Orthogonal gradient descent for continual learning. **MEHRDAD FARAJTABAR ; NAVID AZIZAN ; ALEX MOTT ; ANG LI.** International Conference on Artificial Intelligence and Statistics. PMLR, 2020, 3762-3773
- **JAMES KIRKPATRICK ; RAZVAN PASCANU ; NEIL RABINOWITZ ; JOEL VENESS ; GUILLAUME DESJARDINS ; ANDREI A RUSU ; KIERAN MILAN ; JOHN QUAN ; TIAGO RAMALHO ; AGNIESZKA GRABSKA-BARWINSKA et al.** Overcoming catastrophic forgetting in neural networks. *Proceedings of the national academy of sciences,* 2017, vol. 114 (13), 3521-3526

- **HIPPOLYT RITTER ; ALEKSANDAR BOTEV ; DAVID BARBER.** Online structured laplace approximations for overcoming catastrophic forgetting. *Advances in Neural Information Processing Systems,* 2018, 3738-3748
- **ANDREI A RUSU ; NEIL C RABINOWITZ ; GUILLAUME DESJARDINS ; HUBERT SOYER ; JAMES KIRKPATRICK ; KORAY KAVUKCUOGLU ; RAZ-VAN PASCANU ; RAIA HADSELL.** Progressive neural networks. *arXiv:1606.04671,* 2016
- **JAEHONG YOON ; EUNHO YANG ; JEONGTAE LEE ; SUNG JUHWANG.** Lifelong learning with dynamically expandable networks. *arXiv:1708.01547,* 2017
- **ANTHONY ROBINS.** Catastrophic forgetting, rehearsal and pseudorehearsal. *Connection Science,* 1995, vol. 7 (2), 123-146
- **MATTHEW RIEMER ; IGNACIO CASES ; ROBERT AJEMIAN ; MIAO LIU ; IRINA RISH ; YUHAI TU ; GERALD TESAURO.** Learning to learn without forgetting by maximizing transfer and minimizing interference. *arXiv:1810.11910,* 2018
- **SYLVESTRE-ALVISE REBUFFI ; ALEXANDER KOLESNIKOV ; GEORGSPERL ; CHRISTOPH H LAMPERT.** icarl: Incremental classifier and representation learning. *Proceedings of the IEEE conference on Computer Vision and Pattern Recognition,* 2017, 2001-2010
- **PIETRO BUZZEGA ; MATTEO BOSCHINI ; ANGELO PORRELLO ; DAVIDEABATI ; SIMONE CALDERARA.** Dark experience for general continual learning: a strong, simple baseline. *arXiv:2004.07211,* 2020
- **SEBASTIAN FARQUHAR ; YARIN GAL.** Towards robust evaluations of continual learning. *arXiv:1805.09733,* 2018
- **NITIN KAMRA ; UMANG GUPTA ; YAN LIU.** Deep generative dual memory network for continual learning. *arXiv:1710.10368,* 2017